(19) **Europäisches Patentamt European Patent Office Office européen des brevets**

(11) **EP 2 142 358 B1**

(12) **FASCICULE DE BREVET EUROPEEN**

(45) Date de publication et mention de la délivrance du brevet:
**06.04.2016 Bulletin 2016/14**

(21) Numéro de dépôt: **08788146.2**

(22) Date de dépôt: **09.04.2008**

(51) Int Cl.:
***B29C 70/54*** *(2006.01)*

(86) Numéro de dépôt international:
**PCT/FR2008/050624**

(87) Numéro de publication internationale:
**WO 2008/139115 (20.11.2008 Gazette 2008/47)**

(54) **PROCÉDÉ DE RÉALISATION D'UNE PIÈCE STRUCTURELLE EN MATÉRIAU COMPOSITE D'ÉPAISSEUR CALIBRÉE**

VERFAHREN ZUR HERSTELLUNG EINES STRUKTURTEILS EINES VERBUNDMATERIALS MIT KALIBRIERTER DICKE

METHOD FOR MAKING A STRUCTURAL PART OF A COMPOSITE MATERIAL HAVING A CALIBRATED THICKNESS

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **13.04.2007 FR 0754446**

(43) Date de publication de la demande:
**13.01.2010 Bulletin 2010/02**

(73) Titulaire: **AIRBUS OPERATIONS (S.A.S)**
**31060 Toulouse (FR)**

(72) Inventeurs:
• **NORMAND, Mathieu**
**F-31000 Toulouse (FR)**
• **LACOMBE, Jean-Claude**
**F-31700 Blagnac (FR)**

(74) Mandataire: **Gicquel, Olivier Yves Gérard et al**
**Airbus Opérations (S.A.S.)**
**Intellectual Property Department**
**316, route de Bayonne**
**ETRT - M0101/1**
**31060 Toulouse Cedex 9 (FR)**

(56) Documents cités:
**US-A- 5 840 399        US-A- 6 018 328**
**US-A1- 2002 160 187**

• **"A METHOD OF MACHINING LOW DENSITY RANDOM FIBER COMPOSITES" RESEARCH DISCLOSURE, MASON PUBLICATIONS, HAMPSHIRE, GB, no. 363, 1 juillet 1994 (1994-07-01), page 348, XP000461297 ISSN: 0374-4353**

**EP 2 142 358 B1**

**Description**

DOMAINE TECHNIQUE DE L'INVENTION

L'invention appartient au domaine des structures comportant des éléments structuraux en matériau composite.
En particulier la présente invention a pour objet un procédé de réalisation d'un élément structural en matériau composite dont l'épaisseur doit être localement obtenue, lors de la réalisation dudit élément, en respectant des tolérances précises.

ART ANTERIEUR

Dans les structures travaillantes, c'est à dire soumises à des contraintes significatives au regard de la résistance des matériaux utilisés pour réaliser les dites structures, les éléments constituant la structure se doivent d'être assemblés avec précision ce qui suppose que les dimensions des différents éléments assemblés, au moins au niveau des interfaces d'assemblage, soient parfaitement coordonnées entre elles.
Pour cela les différents éléments sont définis par les bureaux d'études avec des tolérances plus ou moins sévères que les ateliers de fabrication se doivent de respecter.
De tels problèmes se rencontrent de manière générale dans de nombreuses industries mécaniques et sont aujourd'hui bien maîtrisés lorsque les éléments de structure à assembler sont réalisés dans des matériaux métalliques pour lesquels les techniques d'usinage permettent moyennant des précautions adaptées et des coûts plus ou moins élevés de maîtriser les dimensions des éléments même lorsque les tolérances sur les dimensions sont sévères.
Lorsque les éléments de structure sont réalisés en matériaux composites, situation de plus en plus fréquente, notamment en construction aéronautique, en raison des avantages des matériaux composites en terme de masses par exemple, il s'avère beaucoup plus difficile de respecter les dimensions imposées pour les opérations d'assemblage en raison des difficultés à respecter les tolérances de dimensions dans la réalisation de tels éléments.
Les composites entrant dans la réalisation des éléments auxquels s'intéresse l'invention sont les composites comportant des fibres longues, par exemple carbone, kevlar®, ou verre, maintenues dans une matrice organique, en général une résine durcie par polymérisation (résine thermodure) ou par refroidissement après formage à chaud (résine thermoplastique).
De tels éléments sont également susceptibles de comporter d'autres matériaux, métalliques notamment, tels que des inserts ou des plaques, par exemple dans le cas du glare® formé par une alternance de plis de fibres imprégnées de résine et de feuilles métalliques minces.
En effet ces matériaux composites à fibre longue sont la plupart du temps déposés en plis successifs, dont le nombre peut atteindre plusieurs centaines, pour lesquelles l'orientation des fibres est choisie au niveau de chaque pli afin d'obtenir les caractéristiques mécaniques voulues pour l'élément.
Du fait de la superposition de nombreux plis lors de la réalisation de l'élément et des procédés de pose des plis successifs, les tolérances sur les épaisseurs de chaque pli et de chaque interpli s'ajoutent et, dans les cas les plus défavorables, l'élément fini présente des épaisseurs qui sont localement dans une zone d'assemblage supérieures à la valeur maximale prévue ou inférieure à la valeur minimale prévue.
Les solutions sont alors très limitées.
Si l'élément présente une épaisseur supérieure à l'épaisseur maximale admissible, une surépaisseur, le dit élément ne peut pas être assemblé tel que avec un autre élément qui respecte les dimensions attendues.
Il n'est pas possible de diminuer l'épaisseur de l'élément par un enlèvement de matière car cet enlèvement de matière aurait pour effet de diminuer localement le nombre de plis de fibres et donc affecterait la résistance structurale de la pièce.
Il est théoriquement possible de réaliser l'autre élément devant être assemblé avec des dimensions adaptées pour tenir compte de la surépaisseur mais une telle solution n'est pas réellement acceptable sur le plan industriel sauf pour de faibles quantités produites ou pour des éléments à grande valeur ajoutée et de plus cette solution affecte l'interchangeabilité des éléments et donc pose des difficultés supplémentaires en cas de nécessité de réparation.
La solution la plus industrielle consiste donc à rebuter la pièce présentant des surépaisseurs inacceptables et à renoncer à son utilisation.
Si l'élément présente une épaisseur inférieure à l'épaisseur minimale admissible, la solution la plus généralement appliquée consiste au moment de l'assemblage à remplir l'espace intercalaire créé par le manque d'épaisseur au moyen de cales et ou d'un mastic d'assemblage.
Cette solution est toutefois limitée à certaines épaisseurs en raison de son impact sur la résistance structurale de l'assemblage et peut, dans le cas des structures aéronautiques en particulier, nécessiter l'intervention d'un bureau d'études pour accepter la solution dans chaque cas d'espèce et déroger à la définition nominale de l'élément et de son assemblage.

En outre ces solutions posent des problèmes industriels difficilement acceptables en pratique :

- les opérations de remplissage sont délicates, longues et variables d'un assemblage à l'autre ;
- il n'est pas possible d'automatiser efficacement les opérations de remplissage ;
- la manipulation des mastics de remplissage est délicate en raison des risques de toxicité pour l'homme et pour l'environnement.

Il existe donc un réel intérêt à développer une solution qui permettrait de maîtriser l'épaisseur des éléments réalisés en matériaux composites en vu de la réalisation d'un assemblage structural ce que l'invention propose précisément.

Le document US 6,018,328 propose la mise en place sur une surface d'un élément en matériau composite des plis « sacrifiés » qui peuvent être poncés pour permettre un meilleur ajustement de la pièce. Ce document ne propose cependant aucun moyen pour déterminer l'épaisseur pouvant être poncée.

## DESCRIPTION GENERALE DE L'INVENTION

Dans l'invention, on propose une solution notamment pour maîtriser totalement l'épaisseur d'une structure composite finie afin qu'elle soit comprise dans un intervalle de tolérance prédéfini. Cette solution permet notamment de réduire au maximum l'utilisation de mastics d'assemblage, qui peuvent être toxiques pour l'homme et l'environnement, lors de l'assemblage des structures constituant des éléments, par exemple, d'un véhicule de type avion. Un but essentiel de l'invention est de maîtriser l'épaisseur desdites structures dans les zones d'assemblage en particulier. Pour cela, des plis non structuraux sont déposés sur les plis structuraux d'une pièce composite, lors de la fabrication de la pièce. Une fois les plis déposés et durcis, les plis non structuraux, dont l'épaisseur est calculée au moyen du procédé selon l'invention, sont usinés pour obtenir l'épaisseur voulue de la pièce.

Dans la mise en oeuvre du procédé selon l'invention, on propose d'introduire une couche de plis supplémentaires non structuraux, dit plis de calibrage, pour la fabrication d'un panneau en composite, l'épaisseur de ladite couche étant calculée en fonction de l'écart entre l'épaisseur théorique du panneau et l'épaisseur effectivement mesurée.

D'une façon générale, le procédé selon l'invention permet :

- d'améliorer la précision de dimensionnement lors de la fabrication
- d'obtenir un excellent aspect surfacique après usinage
- de faciliter le montage intermédiaire
- de faciliter le montage final
- de supprimer ou de limiter l'utilisation de mastic d'assemblage.

Le procédé selon l'invention peut être appliqué à des matériaux composites comportant des fibres tels que des fibres de verre, de kevlar, ou de carbone, le cas échéant utilisées conjointement avec des feuilles métalliques.

L'invention concerne donc essentiellement un procédé de réalisation d'une pièce structurale en matériau composite comportant des plis structuraux de fibres dans une résine durcie, les dits plis structuraux étant aptes à résister aux efforts susceptibles d'être appliqués sur la pièce en exploitation, ladite pièce structurale ayant, dans au moins dans une zone, une épaisseur prédéterminée Enom définie avec des tolérances de réalisation, ledit procédé comportant les étapes de :

a) mise en place des plis structuraux, les dits plis structuraux ayant, lorsque la résine est durcie, une épaisseur totale Es, dite épaisseur structurale, dans la dite zone d'épaisseur prédéterminée ;
b) mise en place sur au moins une face des plis structuraux, au moins dans la zone d'épaisseur prédéterminée, d'un ou de plusieurs plis non nécessaires à la résistance structurale, dits plis de calibrage, tels qu'une épaisseur ΔE des dits plis de calibrage soit au moins égale à la valeur minimale de Enom moins une épaisseur esm égale à une valeur minimale pouvant être obtenue et acceptée pour l'épaisseur structurale Es ;
c) rendre solidaire les plis structuraux et les plis de calibrage;
d) lorsqu'une épaisseur totale de la pièce dans la zone considérée, correspondant à l'épaisseur Es ajouté à l'épaisseur ΔE, est supérieure à la valeur maximale admise de Enom, calibrage de l'épaisseur de la pièce par usinage des plis de calibrage afin que l'épaisseur totale de ladite pièce dans ladite zone soit dans un intervalle de tolérances admis pour Enom.

Outre les caractéristiques principales qui viennent d'être mentionnées dans le paragraphe précédent, le procédé selon l'invention peut présenter une ou plusieurs caractéristiques supplémentaires parmi les suivantes :

- la valeur Enom est déterminée lors de la conception de la pièce pour être supérieure à une valeur ESM correspondant à une épaisseur maximale admise de l'épaisseur structurale Es.
- la valeur esm est choisie pour correspondre à l'épaisseur structurale Es obtenue lorsque tous les plis structuraux ont chacun une épaisseur correspondant à une épaisseur minimale d'un intervalle d'épaisseurs attendues pour les dits plis structuraux.
- la valeur ESM est choisie pour correspondre à l'épaisseur structurale Es obtenue lorsque tous les plis structuraux ont chacun une épaisseur correspondant à une épaisseur maximale d'un intervalle d'épaisseurs attendues pour les dits plis structuraux.
- les plis de calibrage sont réalisés avec un matériau composite comportant des fibres dans une résine compatible avec la résine du matériau composite structural.
- la résine des plis structuraux est choisie parmi des résines durcissant par polymérisation.
- au moins un pli de calibrage est mis en place sur chacune des faces des plis structuraux dans au moins la zone d'épaisseur prédéterminée.
- au moins un pli, dit pli visuel, est mis en place avant ou pendant la mise en place des plis de calibrage entre les plis structuraux d'une part et les plis de calibrage d'autre part, ou entre des plis de calibrage, ledit pli visuel comportant des caractéristiques permettant à un observateur, au moins dans certaines conditions d'observation, de distinguer ledit pli visuel des plis de calibrage et des plis structuraux lorsque le dit pli visuel est ou a été usiné lors de l'opération de calibrage.

La présente invention se rapporte également à une pièce structurale en matériau composite, au moins pour partie, le dit matériau composite comportant des fibres dans une résine durcie, ladite pièce structurale ayant dans au moins une zone une épaisseur Enom définie avec une tolérance de fabrication, caractérisé en ce que ladite pièce structurale comporte dans la au moins une zone d'épaisseur Enom :

- un empilement de plis, dits plis structuraux, nécessaires à la résistance structurale de la pièce, ayant une épaisseur inférieure ou égale à Enom ;
- sur au moins une face du dit empilement de plis structuraux, au moins un pli non nécessaire à la résistance structurale, dit plis de calibrage,

  - solidaires des plis structuraux ;
  - comportant une face libre usinée ;
  - dont l'épaisseur est égale à une valeur de Enom moins l'épaisseur des plis structuraux.

Outre les caractéristiques principales qui viennent d'être mentionnées dans le paragraphe précédent, la pièce structurale selon l'invention peut présenter la caractéristique supplémentaire suivante :

- ladite pièce comporte au moins un pli, dit pli visuel, entre les plis structuraux d'une part et les plis de calibrage d'autre part ou entre des plis de calibrage.

L'invention et ses différentes applications seront mieux comprises à la lecture de la description qui suit et à l'examen des figures qui l'accompagnent.

BREVE DESCRIPTION DES FIGURES

Celles-ci ne sont présentées qu'à titre indicatif et nullement limitatif de l'invention. Les figures montrent :

- à la figure 1, quatre vues en coupe (a, b, c et d) d'une portion de panneau en matériau composite, illustrant quatre étapes du procédé selon l'invention ;
- à la figure 2, une vue en coupe d'une portion de panneau composite d'épaisseur structurale minimale, illustrant l'étape d'usinage selon l'invention ;
- à la figure 3, une vue en coupe d'une portion de panneau composite d'épaisseur structurale maximale, illustrant l'étape d'usinage selon l'invention.

DESCRIPTION DETAILLEE DES FORMES DE REALISATION PREFEREES DE L'INVENTION

Une pièce structurale 1 en matériau composite comporte essentiellement un empilement 2 de plis structuraux, chaque pli comportant des fibres longues résistantes maintenues dans une résine qui maintient les fibres dans la position voulue, assure la cohésion de chaque plis avec les plis voisins et assure la stabilité de ladite pièce structurale.

Un nombre de plis d'une pièce structurale est déterminé, en chaque point de ladite pièce, en fonction des contraintes que doit subir en service ladite pièce. Déterminer le nombre de plis, le type de fibres utilisé, le type de résine utilisé, la disposition et l'orientation des fibres des différents plis relève de la conception connue des pièces structurales en matériaux composites.

En chaque point de la pièce structurale 1 le nombre de plis détermine une épaisseur structurale de la pièce qui est le résultat de l'empilement 2 des plis structuraux et de la résine. Ainsi l'épaisseur en un point est égale à la somme des épaisseurs des plis et des épaisseurs de résine entre deux plis successifs.

Cette épaisseur de la pièce varie donc en pratique d'une pièce fabriquée à une autre d'une part du fait des écarts dans l'épaisseur des plis mis en oeuvre en raison des tolérances dans la fabrication des fibres et d'autre part du compactage des différentes plis, compactage qui détermine la quantité de résine restant dans le matériau composite fini et qui est très sensible dans une certaine mesure à certains paramètres du processus de fabrication.

Par exemple la date de fabrication de la résine par rapport à la date de fabrication de la pièce, les conditions de stockage de la résine ou des fibres pré-imprégnées de résine, la température de polymérisation et la pression exercée pendant la polymérisation sont autant de paramètres pour lesquels les processus industriels acceptent nécessairement certaines tolérances mais qui influent sur la fluidité de la résine lors de la réalisation de la pièce structurale 1 et donc sur la quantité de résine restant dans la pièce finie.

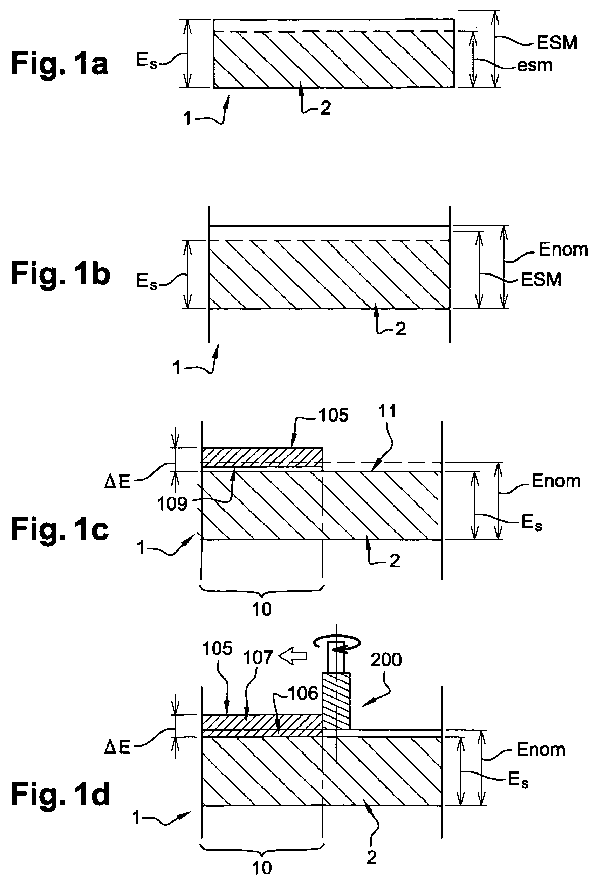

Comme illustré sur la figure 1, afin de réaliser une pièce structurale 1 dont l'épaisseur en chaque point d'une zone 10 doit correspondre à une valeur nominale Enom devant être comprise entre une valeur minimale et une valeur maximale prédéterminées, pour des raisons de tolérances d'assemblage avec une autre pièce par exemple, le procédé suivant l'invention comporte essentiellement les étapes de :

1 - déterminer, fig 1 a, en chaque point pour lequel l'épaisseur de la pièce structurale 1 doit être calibrée, i.e. réalisée avec une épaisseur donnée dans une certaine tolérance, une épaisseur maximale et une épaisseur minimale des plis structuraux 2, dits respectivement épaisseur maximale structurale ESM et épaisseur minimale structurale esm, de la pièce structurale 1 compte tenu des écarts de fabrication acceptables les dits écarts incorporant les tolérances sur les épaisseurs des plis ;

2 - définir, fig 1 b, des dimensions pour ladite pièce structurale et pour les pièces (non représentées) à assembler avec ladite pièce structurale de sorte que l'assemblage des dites pièces soit correct lorsque l'épaisseur de la pièce structurale 1 est égale à une épaisseur nominale Enom au moins égale à l'épaisseur maximale structurale ESM ;

3 - lors de la réalisation de la pièce structurale 1, placer, fig 1 c, au moins dans les zones 10 considérées de la pièce, sur au moins une face 11 des plis structuraux, un ou des plis 105 non nécessaires à la résistance structurale de la pièce, dits plis non structuraux, en matériau composite constitué de fibres dans une résine pouvant être durcie et en nombre tels que l'épaisseur $\Delta E$ (après durcissement de la résine des plis non structuraux) du ou des plis non structuraux est au moins égal à la différence entre l'épaisseur maximale structurale ESM et l'épaisseur minimale structurale esm, et de préférence au moins égal entre la différence entre l'épaisseur nominale Enom et l'épaisseur minimale structurale esm ;

4 - usiner, fig 1d, par enlèvement de matière sur la pièce structurale 1 réalisée, c'est à dire après durcissement de la résine des plis structuraux et des plis non structuraux, une épaisseur de plis non structuraux 107 pour ajuster localement l'épaisseur de la pièce à l'épaisseur nominale Enom.

Pour les besoins d'illustration, la description détaillée des différentes étapes essentielles du procédé suivant l'invention et des variantes dudit procédé est effectuée pour la réalisation d'une pièce structurale en matériau composite ayant la forme d'un panneau représenté plan sur les figures.

Cet exemple de pièce n'est cependant pas limitatif et l'homme du métier est en mesure à partir de cet exemple de mettre en oeuvre l'invention pour toute forme de pièce en matériau composite, en adaptant en particulier les moyens d'enlèvement de matière utilisés.

Les deux premières étapes du procédé relèvent de techniques connues de dimensionnement de pièces en matériau composite. Toutefois lors de la seconde étape, le concepteur de la pièce est conduit, contrairement à ses habitudes, à donner à la pièce structurale et aux pièces qui doivent lui être assemblées, des formes et des dimensions qui correspondent à un assemblage correct pour des épaisseurs nominales Enom supérieures ou égales à une valeur maximale admise de l'épaisseur obtenue avec des plis structuraux et avec des tolérances précises d'assemblage correspondant à des tolérances d'assemblage que la pièce structurale en matériau composites n'est pas en mesure, en général, de garantir. En effet, compte tenu des tolérances de fabrication sur les épaisseurs, en général l'épaisseur Es, sera comprise entre esm et ESM $\leq$ Enom, soit esm, $\leq$ Es $\leq$ ESM $\leq$ Enom.

Dans la troisième étape, on superpose à la couche de plis structuraux 2 mise en place, par exemple sur un moule, sur une face 11 au moins de ladite couche de plis structuraux, par exemple la face devant recevoir un assemblage, au moins localement dans une zone d'assemblage (10), une couche 105 réalisée avec des plis non structuraux en matériau ne présentant pas de difficulté particulière d'usinage, dits plis de calibrage, dont l'épaisseur $\Delta E$ est au moins

suffisante pour que l'épaisseur totale Es + ΔE de la pièce soit supérieure ou au moins égale à l'épaisseur nominale en tenant compte des tolérances d'épaisseur imposées, i.e. que l'épaisseur totale soit supérieure à la côte minimale recherchée, voire à la côte correspondant à la valeur nominale de Enom. De tels plis de calibrage n'ayant pas de fonction dans la résistance structurale de la pièce 1, sont placés avantageusement uniquement dans des zones d'assemblage, pour éviter des augmentations de masses et de coûts que le dépôt sur d'autres zones est susceptible d'engendrer. Les plis de calibrage sont de préférence placés sur une face de la pièce opposée à la face en contact avec un moule lorsqu'un moule avec une seule forme, sans contre forme, est utilisé pour fabriquer la pièce. On utilise de préférence pour réaliser cette couche de plis de calibrage, une résine compatible avec celle de la couche des plis structuraux 2 afin d'obtenir une bonne cohésion entre les plis structuraux et les plis de calibrage. Lorsque tous les plis ont été placés, la pièce est durcie de manière conventionnelle par exemple par polymérisation de la résine.

Dans une forme particulière de mise en oeuvre, lorsque les plis structuraux (2) sont réalisés avec une résine dont l'état plus ou moins fluide est fonction de la température, résines dites thermodures, cette troisième étape comporte une phase d'élévation de température des matériaux composites pour assurer la liaison entre les plis structuraux (2) et les plis non structuraux (105) (élévation de température pouvant correspondre à une étape de formage de la pièce) et une étape de refroidissement à l'issue de laquelle les plis structuraux et non structuraux sont solidarisés.

D'autres méthodes connues mises en oeuvre pour la réalisation de pièces en matériaux composites peuvent être utilisées pour assurer le maintien des plis non structuraux avec les plis structuraux.

La quatrième étape du procédé selon l'invention consiste à réaliser un usinage 200 de la couche 105 de plis de calibrage de façon à ce que l'épaisseur totale de la pièce composite 1, somme d'une épaisseur Es de la couche de plis structuraux 2 et d'une épaisseur résiduelle après usinage de la couche 105 de plis de calibrage, soit en chaque point dudit élément comprise dans les épaisseurs totales d'assemblage tolérées pour ledit élément c'est-à-dire entre les épaisseurs déterminant la fourchette de tolérance de l'épaisseur nominale Enom objectif. En effet, il est alors relativement aisé d'obtenir une épaisseur de la pièce structurale 1 dans la zone d'assemblage relativement précise en raison de la tolérance serrée que permet une opération d'usinage au cours de laquelle une partie excédentaire 107 de la couche 105 de plis de calibrage est retirée pour ne laisser que la couche 106 nécessaire au calibrage.

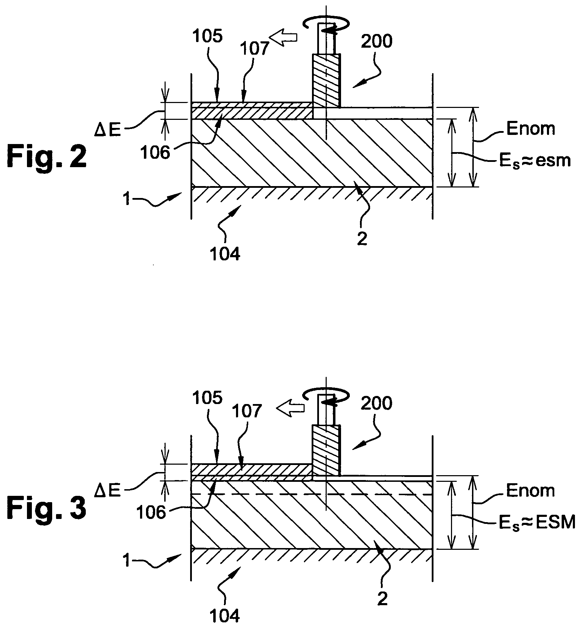

Suivant le procédé, lorsque l'épaisseur de la couche de plis structuraux est importante, comme illustré sur la figure 3, en raison d'une accumulation positive des tolérances, c'est-à-dire que l'épaisseur de ladite couche de plis structuraux est proche de ESM par valeur inférieure, l'opération d'usinage 200 conduit à enlever une partie importante 107 de la couche 105 de plis de calibrage pour réduire l'épaisseur de la couche restante 106 à une valeur faible égale à Enom - ESM, à la tolérance d'usinage près.

Par contre, lorsque l'épaisseur de la couche de plis structuraux 2 est mince, comme illustré sur la figure 2, en raison d'une accumulation négative des tolérances, c'est-à-dire que l'épaisseur de ladite couche de plis structuraux 2 est proche de esm par valeur supérieure, l'opération d'usinage 200 ne nécessite que peu d'enlèvement de matière 107 de la couche 105 de plis de calibrage et la pièce finie a toujours dans la zone d'assemblage une épaisseur proche de Enom.

Il convient de noter que les valeurs de esm et ESM utilisées pour appliquer le procédé peuvent ne pas correspondre à des minimum et maximum absolus mais à des valeurs pouvant être en pratique dépassées par Es. Dans ces cas a priori limités, le concepteur admet le risque de voir réaliser une pièce hors tolérances et accepte un taux de rebut desdites pièces.

Suivant un perfectionnement du procédé, une couche 109, dite pli visuel de détection, est placée à l'interface entre les plis structuraux 2 et les plis de calibrage 105 ou entre les plis de calibrage 105, sensiblement parallèle à la surface 11 de la couche de plis structuraux 2 lors de la mise en oeuvre de la troisième étape du procédé. En effet, lors de l'usinage de la couche 105 de plis de calibrage il est possible, par exemple en raison d'une pièce dont la couche de plis structuraux comporte une épaisseur trop grande, supérieure aux épaisseurs maximales attendues, que des plis structuraux soient détériorés par l'opération d'usinage 200. Bien qu'a priori exceptionnelle, une telle situation doit impérativement être détectée car l'intégrité de la pièce structurale n'est alors plus garantie.

Le pli visuel est choisi afin de détecter un usinage qui atteindrait ledit pli visuel, par exemple avec une couleur contrastée par rapport à la couleur des plis de calibrage. Avantageusement, le pli visuel est réalisé avec un matériau différent des autres plis, par exemple un pli avec des fibres de verre par rapport à des plis avec des fibres de carbone dont les couleurs sont naturellement différentes. Le pli visuel est placé de préférence proche de l'interface entre la couche de plis de calibrage et la couche de plis structuraux. Par couleur contrastée, il convient de considérer tous les moyens qui permettent une détection rapide ce qui peut être également obtenu par exemple avec un pli visuel fluorescent lorsqu'il est éclairé avec une lumière de longueur d'onde adaptée. Ainsi lorsque l'usinage de la couche de plis de calibrage affecte le pli visuel, qui devient détectable par observation en raison d'un contraste avec les plis de calibrage, un opérateur est en mesure d'interrompre l'usinage ou, en fin d'usinage, de procéder à des investigations complémentaires pour vérifier si la pièce est acceptable ou doit être rebutée compte tenu d'un endommagement inacceptable des plis structuraux.

Dans une application particulière, le pli visuel est placé précisément à l'interface entre les plis structuraux et les plis de calibrage et lorsque ledit pli visuel devient visible, il en est déduit que la couche structurale a probablement été endommagée par l'usinage.

A titre d'exemple numérique non limitatif de mise en oeuvre du procédé, on considère un panneau de structure composite réalisé sur une forme 104 dite moule. Dans cet exemple, le panneau est un panneau réalisé à base de fibres de carbone pré-imprégnées de résine et déposées par couches successives ou plis sur le moule 104 dont ils épousent la forme. Le panneau considéré comporte dans cet exemple 200 plis structuraux dans la zone considérée dont l'épaisseur doit être calibrée.

Chaque pli détermine sur le panneau fini une épaisseur de 0,26 millimètres avec une incertitude de +/-3%. Toutes les épaisseurs considérées sont des épaisseurs après durcissement de la résine ou formage. L'épaisseur structurale du panneau comportant 200 plis est donc de 52 millimètres +/-3%, soit esm = 50,5 millimètres et ESM - 53,5 millimètres à l'issue de l'étape 1 du procédé, soit une incertitude de 3mm très supérieure aux tolérances préconisées pour les assemblages structuraux du type envisagé.

Suivant l'étape 2 du procédé, la pièce est donc définie en considérant des épaisseurs au niveau de la zone d'assemblage supérieures à ESM = 53,5 millimètres. En considérant par exemple une tolérance au niveau de l'assemblage de +/- 0,2 millimètre compte tenu des précisions d'usinage attendues, l'épaisseur Enom au niveau de l'assemblage est choisie au moins égale à 53,5 + 0,2 = 53,7 millimètres, par exemple Enom = 53,8 millimètres pour conserver une marge théorique toujours positive entre l'usinage ultérieur et la couche de plis structuraux. Il peut en effet être souhaitable de disposer d'une épaisseur minimale à usiner, par exemple 0,1 millimètre, pour que les moyens d'enlèvement de matière travaillent correctement.

Suivant l'étape 3 du procédé, des plis de calibrage sont déposés avec une épaisseur totale des dits plis de calibrage ΔE suffisante pour que la somme de l'épaisseur des plis structuraux plus l'épaisseur des plis de calibrage soit toujours au moins égale à la valeur Enom choisie dans l'hypothèse où la couche de plis structuraux a la plus faible valeur admise esm, soit ΔE ≥ 53,8 - esm = 3,3 millimètres

De préférence, compte tenu de la tolérance sur les opérations d'usinage de +/-0,2 millimètres, on retient ΔE ≥ 3,3 + 0,2 = 3,5 millimètres.

Avantageusement, les plis de calibrage ne sont déposés que dans les zones 10 devant être calibrées et suivant le procédé mis en oeuvre pour la réalisation de la pièce composite, par exemple l'ensemble est soumis à une pression de compactage et à une cuisson. Dans cet exemple, si la couche de plis de calibrage est réalisée avec des plis, par exemple de 0,2 millimètres +/-5% en épaisseur finie, soit une épaisseur minimale de 0,2 x 0,95 = 0,19 millimètres, le nombre de plis de calibrage retenu pour garantir l'épaisseur voulue 3,5 millimètres sera de 19 plis dont l'épaisseur ΔE sera comprise entre 3,5 millimètres minimum et 0,2 x 1,05 x 19 ≈ 4 millimètres maximum. La pièce a donc, à l'issue de l'étape 3 et dans la zone considérée, une épaisseur comprise entre

$$\text{au minimum, } esm + 3,5 = 54 \text{ millimètres ;}$$

$$\text{au maximum, } ESM + 4 = 57,5 \text{ millimètres ;}$$

pour une épaisseur nominale Enom souhaitée de 53,8 millimètres +/- 0,2 millimètre.

A cette étape du procédé, il convient de noter d'une part que les dispersions de fabrication de l'élément en matériau composite sont importantes 57,5 - 54 ≈ +/- 1,75 millimètres comparées aux tolérances traditionnellement admises pour les assemblages structuraux considérés de +/- 0,2 millimètres et d'autre part que l'épaisseur est toujours supérieure, ou au moins égale, à l'épaisseur nominale Enom = 53,8 millimètres voulue et qu'il est donc possible de diminuer l'épaisseur par usinage pour obtenir une épaisseur égale à l'épaisseur nominale Enom souhaitée dans la tolérance acceptée.

La quatrième étape du procédé consiste en particulier à usiner les plis de calibrage 105, usinage qui, en raison des épaisseurs retenues, n'est réalisé que par enlèvement d'une partie 107 des plis de calibrage. Si un ou des plis de visualisation 109 sont déposés avant les plis de calibrage ou insérés entre des plis de calibrage, lesdits plis de visualisation sont déposés comme des plis de calibrage. L'épaisseur desdits plis de visualisation est alors considérée dans le calcul des épaisseurs ou, avantageusement si leurs faibles nombre ou épaisseur le permet, leur effet sur l'épaisseur est négligé.

Le panneau ainsi réalisé comporte donc au moins une première couche en matériau composite formée d'un empilage de plis structuraux d'épaisseur toujours inférieure à une épaisseur voulue pour un assemblage, et, au moins localement dans des zones d'assemblage, au moins une seconde couche, non structurale, formée de plis de calibrage superposée à la couche structurale dans une zone d'épaisseur voulue, ladite couche formée de plis de calibrage étant usinée à une cote d'épaisseur nominale voulue pour la pièce structurale.

Bien que décrit dans un cas de géométrie simple, l'homme du métier est en mesure de généraliser l'invention pour tenir compte de formes plus complexes de pièces structurales, pouvant avoir des épaisseurs variables et pouvant présenter des plis de calibrage sur différentes zones des plis structuraux sur une face ou sur plusieurs faces.

La pièce structurale comporte le cas échéant d'autres éléments pouvant modifier localement l'épaisseur de la pièce. De tels éléments consistent par exemple en des inserts structuraux métalliques ou non métalliques, des matériaux de remplissage tels que des mousses ou autres matériaux alvéolaires, ou encore des plis ayant des fonctions particulières tels que des plis en surface de protection ou de métallisation.

Dans ces cas, on comprend que les épaisseurs de chacun des éléments constituant l'épaisseur de la pièce structurale dans la zone considérée sont pris en compte avec les incertitudes de réalisation des dits éléments sur leurs épaisseurs propres, au même titre que pour les plis structuraux, afin d'appliquer le procédé suivant l'invention.

## Revendications

1. Procédé de réalisation d'une pièce structurale (1) en matériau composite comportant des plis structuraux (2) de fibres dans une résine durcie, les dits plis structuraux (2) étant aptes à résister aux efforts susceptibles d'être appliqués sur la pièce (1) en exploitation, ladite pièce structurale (1) ayant, dans au moins dans une zone (10), une épaisseur prédéterminée Enom définie avec des tolérances de réalisation, ledit procédé comportant les étapes de :

   a) mise en place des plis structuraux (2), les dits plis structuraux ayant, lorsque la résine est durcie, une épaisseur totale Es, dite épaisseur structurale, dans la dite zone (10) d'épaisseur prédéterminée ;
   b) mise en place sur au moins une face (11) des plis structuraux (2), au moins dans la zone (10) d'épaisseur prédéterminée, d'un ou de plusieurs plis non nécessaires à la résistance structurale, dits plis de calibrage (105), tels qu'une épaisseur $\Delta E$ des dits plis de calibrage soit au moins égale à la valeur minimale de Enom moins une épaisseur esm égale à une valeur minimale pouvant être obtenue et acceptée pour l'épaisseur structurale Es ;
   c) rendre solidaire les plis structuraux (2) et les plis de calibrage (105);
   d) lorsqu'une épaisseur totale de la pièce dans la zone (10) considérée, correspondant à l'épaisseur Es ajouté à l'épaisseur $\Delta E$, est supérieure à la valeur maximale admise de Enom, calibrage de l'épaisseur de la pièce (1) par usinage des plis de calibrage afin que l'épaisseur totale de ladite pièce dans ladite zone soit dans un intervalle de tolérances admis pour Enom ;

   **caractérisé en ce qu'**au moins un pli (109), dit pli visuel, est mis en place avant ou pendant la mise en place des plis de calibrage (105) entre les plis structuraux (2) d'une part et les plis de calibrage (105) d'autre part, ou entre des plis de calibrage, ledit pli visuel comportant des caractéristiques permettant à un observateur, au moins dans certaines conditions d'observation, de distinguer ledit pli visuel des plis de calibrage (105) et des plis structuraux (2) lorsque le dit pli visuel est ou a été usiné lors de l'opération de calibrage.

2. Procédé suivant la revendication 1 dans lequel la valeur Enom est déterminée lors de la conception de la pièce (1) pour être supérieure à une valeur ESM correspondant à une épaisseur maximale admise de l'épaisseur structurale Es.

3. Procédé suivant l'une des revendications 1 ou 2 dans lequel la valeur esm est choisie pour correspondre à l'épaisseur structurale Es obtenue lorsque tous les plis structuraux ont chacun une épaisseur correspondant à une épaisseur minimale d'un intervalle d'épaisseurs attendues pour les dits plis structuraux.

4. Procédé suivant l'une des revendications 1, 2 ou 3 dans lequel la valeur ESM est choisie pour correspondre à l'épaisseur structurale Es obtenue lorsque tous les plis structuraux ont chacun une épaisseur correspondant à une épaisseur maximale d'un intervalle d'épaisseurs attendues pour les dits plis structuraux.

5. Procédé suivant l'une des revendications précédentes dans lequel les plis de calibrage (105) sont réalisés avec un matériau composite comportant des fibres dans une résine compatible avec la résine du matériau composite structural (2).

6. Procédé suivant l'une des revendications précédentes dans lequel la résine des plis structuraux est choisie parmi des résines durcissant par polymérisation.

7. Procédé suivant l'une des revendications précédentes dans lequel au moins un pli de calibrage est mis en place sur chacune des faces des plis structuraux (2) dans au moins la zone (10) d'épaisseur prédéterminée.

**Patentansprüche**

1. Verfahren zur Herstellung eines Strukturteils (1) aus Verbundmaterial, welches strukturelle Stofflagen (2) aus Fasern in einem gehärteten Harz aufweist, wobei die strukturellen Stofflagen (2) geeignet sind, den Beanspruchungen, die auf das Teil (1) im Betrieb ausgeübt werden können, Stand zu halten, wobei das Strukturteil (1) mindestens in einem Bereich (10) eine vorgegebene Dicke Enom besitzt, welche mit Fertigungstoleranzen festgelegt ist, wobei das Verfahren die folgenden Schritt aufweist:

   a) Anordnen von strukturellen Stofflagen (2), wobei, wenn das Harz ausgehärtet ist, die strukturellen Stofflagen eine Gesamtdicke Es, so genannte strukturelle Dicke, in dem Bereich (10) vorgegebener Dicke hat;
   b) Anordnen von einer oder mehreren, für die strukturelle Widerstandsfähigkeit nicht notwendigen Stofflagen, so genannte Stofflagen zur Kalibrierung (105), auf mindestens einer Fläche (11) der strukturellen Stofflagen (2) zumindest in dem Bereich (10) vorgegebener Dicke, so dass eine Dicke ΔE der Stofflagen zur Kalibrierung zumindest gleich dem minimalen Wert von Enom minus einer Dicke esm ist, welche gleich einem minimalen Wert ist, welcher für die strukturelle Dicke Es erzielt und akzeptiert werden kann;
   c) die strukturellen Stofflagen (2) und die Stofflagen zur Kalibrierung (105) fest miteinander verbinden;
   d) wenn eine Gesamtdicke des Teils in dem betrachteten Bereich (10), welche der zur Dicke ΔE hinzugefügte Dicke Es entspricht, größer als der maximale zugelassene Wert von Enom ist, Kalibrieren der Dicke des Teils (1) durch Bearbeitung der Stofflagen zur Kalibrierung, damit die Gesamtdicke des Teils in dem Bereich in einem zulässigen Toleranzintervall für Enom liegt;

   **dadurch gekennzeichnet, dass** mindestens eine Stofflage (109), so genannte visuelle Stofflage, vor oder während des Anordnens der Stofflagen zur Kalibrierung (105) zwischen den strukturellen Stofflagen (2) einerseits und den Stofflagen zur Kalibrierung (105) andererseits oder zwischen den Stofflagen zur Kalibrierung angeordnet wird, wobei die visuelle Stofflage Merkmale aufweist, welche es einem Beobachter ermöglichen, unter zumindest bestimmten Beobachtungsbedingungen die visuelle Stofflage von den Stofflagen zur Kalibrierung (105) und den strukturellen Stofflagen (2) zu unterscheiden, wenn die visuelle Stofflage bei dem Arbeitsschritt zur Kalibrierung bearbeitet wird oder bearbeitet worden ist.

2. Verfahren nach Anspruch 1, bei welchem der Wert Enom beim Entwurf des Teils (1) festgelegt wird, um größer als ein Wert ESM zu sein, welcher einer maximalen Dicke entspricht, welche für die strukturelle Dicke Es zulässig ist.

3. Verfahren nach einem der Ansprüche 1 oder 2, bei welchem der Wert esm ausgewählt wird, um der strukturellen Dicke Es zu entsprechen, welche erzielt wird, wenn sämtliche strukturellen Stofflagen jeweils eine Dicke besitzen, welche einer minimalen Dicke eines Intervalls von Dicken entspricht, welche für die strukturellen Stofflagen erwartet werden.

4. Verfahren nach einem der Ansprüche 1, 2 oder 3, bei welchem der Wert ESM ausgewählt wird, um der strukturellen Dicke Es zu entsprechen, welche erzielt wird, wenn sämtliche strukturellen Stofflagen jeweils eine Dicke besitzen, welche einer maximalen Dicke eines Intervalls von Dicken entspricht, welche für die strukturellen Stofflagen erwartet werden.

5. Verfahren nach einem der vorhergehenden Ansprüche, bei welchem die Stofflagen zur Kalibrierung (105) aus einem Verbundmaterial ausgeführt sind, welches Fasern in einem mit dem Harz des strukturellen Verbundmaterials (2) kompatiblen Harz aufweist.

6. Verfahren nach einem der vorhergehenden Ansprüche, bei welchem das Harz der strukturellen Stofflagen aus Harzen ausgewählt werden, welche durch Polymerisation aushärten.

7. Verfahren nach einem der vorhergehenden Ansprüche, bei welchem mindestens eine Stofflage zur Kalibrierung auf jeder der Flächen der strukturellen Stofflagen (2) in zumindest dem Bereich (10) vorgegebener Dicke angeordnet wird.

**Claims**

1. Method for producing a structural part (1) made of composite material comprising structural plies (2) of fibres in a hardened resin, said structural plies (2) being able to withstand the loads likely to be applied to the part (1) in operation, said structural part (1) having, in at least one zone (10), a predetermined thickness Enom defined with production tolerances, said method comprising the steps of:

a) placement of the structural plies (2), said structural plies having, when the resin is hardened, a total thickness Es, called structural thickness, in said zone (10) of predetermined thickness;

b) placement on at least one face (11) of the structural plies (2), at least in the zone (10) of predetermined thickness, of one or more plies not necessary to the structural resistance, called gauging plies (105), such that a thickness ΔE of said gauging plies is at least equal to the minimum value of Enom minus a thickness esm equal to a minimum value that can be obtained and accepted for the structural thickness Es;

c) securing together the structural plies (2) and the gauging plies (105);

d) when a total thickness of the part in the zone (10) concerned, corresponding to the thickness Es added to the thickness ΔE, is greater than the maximum value allowed for Enom, gauging of the thickness of the part (1) by machining of the gauging plies in order for the total thickness of said part in said zone to be within a tolerance range accepted for Enom;

**characterized in that** at least one ply (109), called visual ply, is placed before or during the placement of the gauging plies (105) between the structural plies (2) on the one hand and the gauging plies (105) on the other hand, or between gauging plies, said visual ply comprising characteristics enabling an observer, at least in certain conditions of observation, to distinguish said visual ply from the gauging plies (105) and from the structural plies (2) when said visual ply is or has been machined during the gauging operation.

2. Method according to Claim 1, in which the value Enom is determined during the design of the part (1) to be greater than a value ESM corresponding to a maximum thickness accepted for the structural thickness Es.

3. Method according to either of Claims 1 and 2, in which the value esm is chosen to correspond to the structural thickness Es obtained when all the structural plies each have a thickness corresponding to a minimum thickness of a range of thicknesses expected for said structural plies.

4. Method according to one of Claims 1, 2 or 3, in which the value ESM is chosen to correspond to the structural thickness Es obtained when all the structural plies each have a thickness corresponding to a maximum thickness of a range of thicknesses expected for said structural plies.

5. Method according to one of the preceding claims, in which the gauging plies (105) are produced with a composite material comprising fibres in a resin compatible with the resin of the structural composite material (2).

6. Method according to one of the preceding claims, in which the resin of the structural plies is chosen from resins that harden by polymerization.

7. Method according to one of the preceding claims, in which at least one gauging ply is placed on each of the faces of the structural plies (2) in at least the zone (10) of predetermined thickness.

**Fig. 1a**

$E_s$ | ESM
esm

1 | 2

**Fig. 1b**

$E_s$ | Enom
ESM

1 | 2

**Fig. 1c**

105 | 11

$\Delta E$
109
Enom
$E_s$

1 | 2

10

**Fig. 1d**

105 107 | 106 | 200

$\Delta E$
Enom
$E_s$

1 | 2

10

**Fig. 2**

**Fig. 3**

**EP 2 142 358 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- US 6018328 A